# FASCICULE DE BREVET EUROPEEN

(11) **EP 2 889 168 B1**
(45) Date de publication et mention de la délivrance du brevet: **02.12.2020**
(21) Numéro de dépôt: 14197846.0
(22) Date de dépôt: 15.12.2014
(51) Int. Cl.: B60H 1/00

(54) **Dispositif de chauffage, ventilation et/ou climatisation**
Vorrichtung zum Heizen, Belüften und/oder Klimatisieren
Heating, ventilation and/or air conditioning device

(30) Priorité: 30.12.2013 FR 1363715
(43) Date de publication de la demande: 01.07.2015
(73) Titulaire: VALEO SYSTEMES THERMIQUES, 78320 Le Mesnil Saint-Denis (FR)
(72) Inventeur: Barbier, Thierry, 78760 Jouars-Pontchartrain (FR); Pernet, Stéphane, 78120 Rambouillet (FR)
(74) Mandataire: Tran, Chi-Hai

(56) Documents cités:
- DE-A1- 19 800 103
- DE-A1-102012 004 655
- FR-A1- 2 788 086
- JP-A- 2008 018 875

## Description

La présente invention concerne un dispositif de chauffage, ventilation et/ou climatisation pour un véhicule automobile.

Le document DE 10 2012 004 655 A1 divulgue un dispositif de chauffage, ventilation et/ou climatisation pour un véhicule automobile, comportant un corps principal comportant au moins un premier canal de circulation d'air, destiné à alimenter une première partie d'un habitacle d'un véhicule automobile, un second canal de circulation d'air, destiné à alimenter une seconde partie de l'habitacle, un boîtier d'entrée d'air monté sur le corps principal, en amont desdits premier et second canaux de circulation du corps principal par rapport au sens de circulation de l'air, le boîtier d'entrée d'air étant traversé par un premier canal d'entrée d'air, débouchant en regard du premier canal de circulation du corps principal, et par un second canal d'entrée d'air débouchant en regard du second canal de circulation du corps principal, les premier et second canaux d'entrée d'air du boîtier étant séparés par une première cloison de séparation du boîtier d'entrée d'air, la surface de la section de passage d'air du premier canal d'entrée d'air étant, au niveau du boîtier d'entrée d'air, différente de la surface de la section de passage d'air du second canal d'entrée d'air.

Un véhicule automobile comporte un habitacle dans lequel débouche de l'air issu classiquement d'un dispositif de chauffage, ventilation et/ou climatisation.

Le véhicule comporte notamment une ou plusieurs buses de dégivrage situées à proximité du pare-brise, des aérateurs situés au niveau de la planche de bord et destinés à délivrer de l'air au conducteur et au passager, et des buses situées au niveau des pieds du conducteur et du passager (buses de pieds).

Le dispositif de chauffage, ventilation et/ou climatisation, également appelé HVAC (pour Heating, Ventilation and Air-Conditioning, en anglais) peut être alimenté soit en air extérieur au véhicule (également appelé air neuf), soit en air de recyclage, c'est-à-dire issu de l'habitacle du véhicule.

L'air extérieur est généralement peu chargé en humidité, lorsqu'il est froid, par comparaison avec l'air de recyclage, mais peut être relativement froid, en particulier en conditions hivernales. Il peut donc être relativement difficile à chauffer.

L'air de recyclage a généralement un taux d'humidité supérieur à l'air extérieur, puisqu'il a déjà été traité par le HVAC, mais est déjà à une température proche de la température à atteindre, c'est-à-dire proche de la température de consigne définie par exemple par le conducteur ou le passager.

Suivant les conditions de fonctionnement, il peut donc être particulièrement intéressant d'utiliser de l'air extérieur pour le rejeter dans l'habitacle au niveau des buses de dégivrage situées à proximité du pare-brise, après chauffage au travers du dispositif précité par exemple. Le taux d'humidité de l'air frais étant relativement faible, le risque de générer de la buée sur le pare-brise est donc également faible.

A l'inverse, il peut être avantageux d'utiliser de l'air de recyclage pour le rejeter dans l'habitacle au niveau des buses de pieds. De cette manière, même en conditions hivernales et lorsqu'un débit d'air important est demandé par le conducteur ou le passager, il est possible de réchauffer plus rapidement cet air de recyclage à la température de consigne avant qu'il ne soit rejeté dans l'habitacle. Le confort pour les utilisateurs est grandement accéléré et le risque de générer de la buée sur le pare-brise est faible, cet air de recyclage étant rejeté à distance du pare-brise.

Afin de profiter de tels avantages, il est important de pouvoir dissocier les flux d'air (air extérieur - air de recyclage), en particulier lors du passage desdits flux d'air au travers du dispositif de chauffage, ventilation et/ou climatisation.

L'invention propose un dispositif de chauffage, ventilation et/ou climatisation pour un véhicule automobile, selon la revendication 1, comportant un corps principal comportant au moins un premier canal de circulation d'air, destiné à alimenter une première partie d'un habitacle d'un véhicule automobile, un second canal de circulation d'air, destiné à alimenter une seconde partie de l'habitacle, un boîtier d'entrée d'air monté sur le corps principal, en amont desdits premier et second canaux du corps principal par rapport au sens de circulation de l'air, le boîtier d'entrée d'air étant traversé par un premier canal d'entrée d'air, débouchant en regard du premier canal de circulation du corps principal, et par un second canal d'entrée d'air débouchant en regard du second canal de circulation du corps principal, les premier et second canaux du boîtier d'entrée d'air étant séparés par une première cloison de séparation du boîtier d'entrée d'air, caractérisé en ce qu'au niveau du boîtier d'entrée d'air, la surface de la section de passage d'air du premier canal d'entrée d'air est différente de la surface de la section de passage d'air du second canal d'entrée d'air.

Selon l'invention, le boîtier d'entrée d'air présente ainsi une cloison de séparation permettant de canaliser un flux d'air provenant du premier canal d'entrée d'air vers le premier canal de circulation du corps principal et un flux d'air provenant du second canal d'entrée d'air vers le second canal de circulation du corps principal.

Le premier canal de circulation d'air peut alors alimenter par exemple les buses de dégivrage situées à proximité du pare-brise et le second canal de circulation d'air peut alors alimenter les buses de pieds.

L'intégration au dispositif de deux sections d'entrée d'air de dimensions différentes offre la possibilité d'alimenter l'un du premier canal d'entrée d'air et du second canal d'entrée d'air avec un débit d'air supérieur à l'autre du premier canal d'entrée d'air et du second canal d'entrée d'air.

Dans une réalisation particulière du dispositif, la surface de la section de passage d'air du premier canal d'entrée d'air est supérieure à la surface de la section de passage d'air du second canal d'entrée d'air, et par exemple environ 1,7 à 2,3 fois supérieure, préférentiellement environ 2 fois. Il est ainsi possible d'alimenter la première partie de l'habitacle, par exemple le pare-brise, avec un débit d'air plus important.

Dans une réalisation pratique de l'invention, la surface de la section de passage d'air du premier canal représente entre 55 et 70 % de la somme de la surface de la section de passage d'air du premier canal et surface de la section de passage d'air du second canal.

Selon l'invention, le premier canal d'entrée d'air est subdivisé en un premier conduit et un deuxième conduit séparé l'un de l'autre par une seconde cloison de séparation du boitier d'entrée d'air.

Touiours selon l'invention, le second canal d'entrée d'air est également subdivisé en un premier conduit et un deuxième conduit séparé l'un de l'autre par une troisième cloison de séparation du boitier d'entrée d'air.

Afin de réaliser un contrôle optimal de l'air circulant dans les premier et second canaux de circulation du corps principal et alimentant les première et seconde parties de l'habitacle, il est intéressant que les premiers conduits des premier et second canaux d'entrée d'air soient reliés à des moyens de prélèvement d'air dans une première zone et que les seconds conduits des premier et second canaux d'entrée d'air soient reliés à des moyens de prélèvement d'air dans une seconde zone différente de la première zone.

De cette manière, lorsque le dispositif est monté dans un véhicule automobile, la première zone peut correspondre à l'extérieur du véhicule et la seconde zone peut correspondre à l'intérieur du véhicule et il est alors possible d'alimenter chacun des premier et second canaux de recirculation avec un débit d'air provenant soit de l'air extérieur, de l'air de recyclage ou air intérieur ou d'un mélange des deux.

Selon une autre caractéristique de l'invention, au niveau du boîtier d'entrée d'air, la surface de la section de passage d'air du second conduit du premier canal d'entrée d'air est supérieure à la surface de la section de passage d'air du premier conduit du premier canal d'entrée d'air, et par exemple environ 1,7 à 2,3 fois supérieure, préférentiellement environ 2 fois.

En outre, au niveau du boîtier d'entrée d'air, la surface de la section de passage d'air du second conduit du second canal d'entrée d'air peut être supérieure à la surface de la section de passage d'air du premier conduit du second canal d'entrée d'air, et par exemple environ 1,7 à 2,3 fois supérieure, préférentiellement environ 2 fois.

Au niveau du boîtier d'entrée d'air, la surface de la section de passage d'air du premier conduit du premier canal d'entrée d'air peut être supérieure à la surface de la section de passage d'air du premier conduit du second canal d'entrée d'air, et par exemple environ 1,7 à 2,3 fois supérieure, préférentiellement environ 2 fois.

Selon une autre caractéristique de l'invention, au niveau du boîtier d'entrée d'air, la surface de la section de passage d'air du second conduit du premier canal d'entrée d'air est supérieure à la surface de la section de passage d'air du second conduit du second canal d'entrée d'air, et par exemple environ 1,7 à 2,3 fois supérieure, préférentiellement environ 2 fois.

Selon l'invention, le dispositif comprend des moyens indépendants d'obturation de chacun des premier et second conduits de chacun des premier et second canaux.

Selon une autre caractéristique de l'invention, les moyens d'obturation comprennent des volets ou clapets articulés à déplacement sur le boîtier d'entrée d'air entre une position d'ouverture et une position de fermeture.

En outre, le corps principal est équipé de moyens de génération d'un premier flux d'air à l'intérieur du premier canal de circulation et de moyens de génération d'un second flux d'air à l'intérieur du second canal de circulation.

Dans ce cas, lesdits moyens de génération du premier et du second flux d'air comportent respectivement une première roue à ailettes et une seconde roue à ailettes, entraînées par exemple par un même moteur.

Avantageusement, le corps principal peut comporter un premier boîtier, équipé des moyens de génération du premier flux d'air, et dans lequel est délimitée au moins une partie du premier canal de circulation d'air, le corps principal comportant en outre un second boîtier, équipé des moyens de génération du second flux d'air, et dans lequel est délimitée au moins une partie du second canal de circulation d'air.

L'invention concerne également un véhicule automobile, caractérisé en ce qu'il est équipé d'un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue de face d'un dispositif de chauffage, ventilation et/ou climatisation selon une forme de réalisation de l'invention,
- la figure 2 est une vue de côté du dispositif ;
- les figures 3 et 4 sont des vues en section et en perspective du dispositif ;
- les figures 5 à 7 sont des vues depuis le dessus du boîtier d'entrée d'air du dispositif ;
- les figures 8 à 10 sont des vues schématiques du boîtier d'entrée d'air selon différents scénarios de fonctionnement du dispositif.

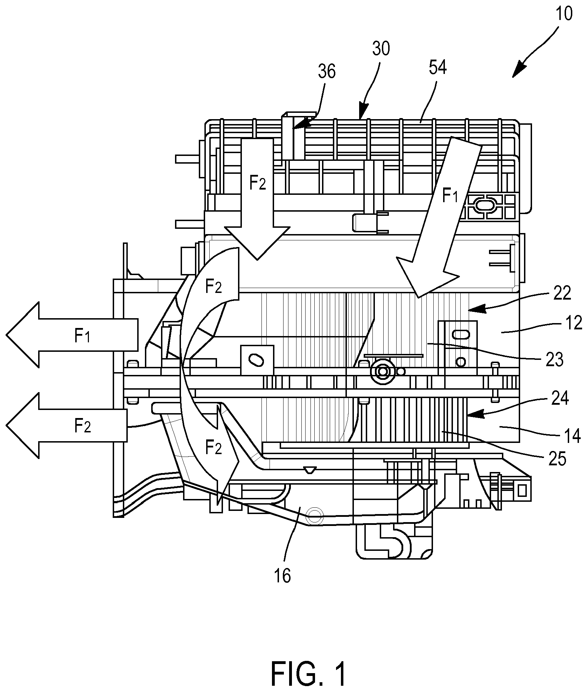

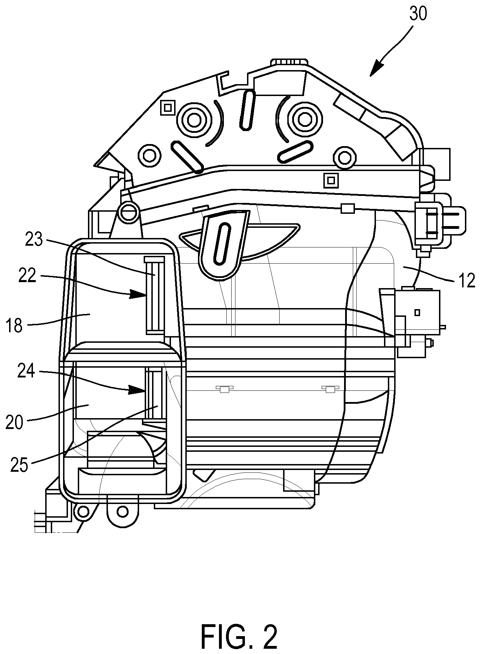

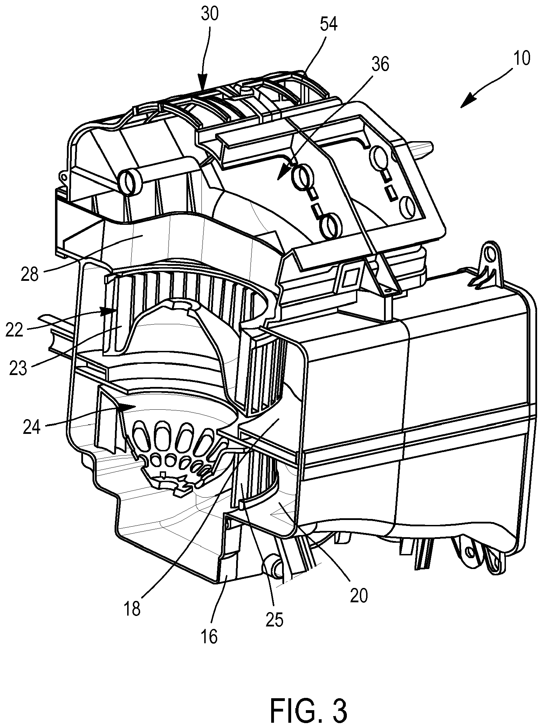

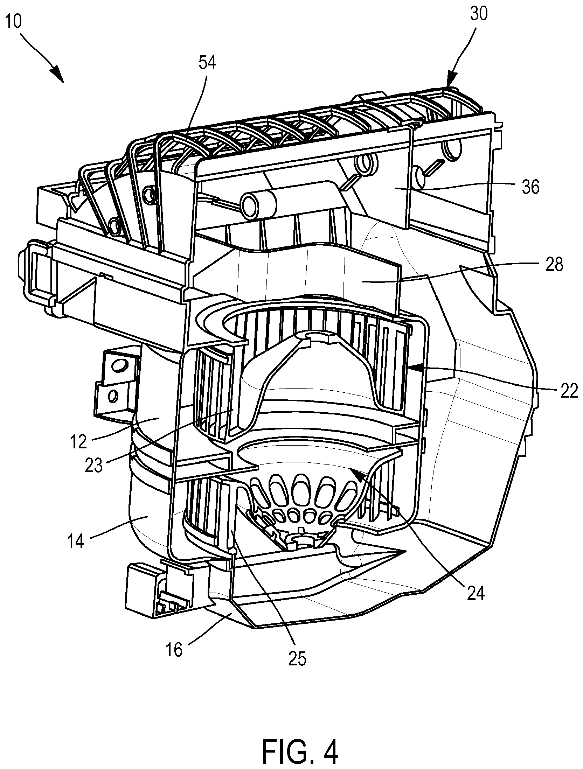

Les figures 1 à 7 illustrent une forme de réalisation d'un dispositif 10 selon l'invention pour le chauffage, la ventilation et/ou la climatisation de l'habitacle d'un véhicule automobile. Celui-ci comporte un corps principal comportant un boîtier supérieur 12, un boîtier inférieur 14 et un capot 16, fixés les uns aux autres et délimitant un premier canal de circulation de fluide 18 ainsi qu'un second canal de circulation de fluide 20. Le boîtier supérieur 12 du corps principal est équipé d'une première roue 22 à ailettes 23 montée dans le premier canal de circulation de fluide 18. Le boîtier inférieur 14 du corps principal est équipé d'une seconde roue 24 à ailettes 25 montée dans le second canal de circulation de fluide 20. Les deux roues 22, 24 sont entraînées à une même vitesse de rotation par un même moteur électrique. Le moteur comporte un arbre tournant.

Le boîtier supérieur 12 du corps principal comporte une paroi 28 de séparation des flux d'air, située en partie supérieure dudit boîtier 12. En vue de dessus, la paroi de séparation 28 a une forme générale de S, qui est la conséquence du positionnement des roues 22, 24 dans le corps principal et des sections nécessaires des différents canaux de circulation 18, 20 d'air en vue d'atteindre les spécifications en termes de répartition de débit d'air.

Le dispositif comporte en outre un boîtier 30 d'entrée d'air fixé sur le corps principal, en particulier fixé sur le boîtier supérieur 12. Le boîtier 30 d'entrée d'air délimite un premier canal 32 situé en regard du premier canal de circulation d'air 18, et un second canal 34 situé en regard du second canal de circulation d'air 20. Les premier 32 et second 34 canaux d'entrée d'air du boîtier 30 d'entrée d'air sont séparés par une cloison de séparation 36, s'étendant en regard de la paroi de séparation 28 du corps principal et ayant une forme générale également en S. La cloison de séparation 36 est étanche et assure à elle seule la séparation d'un premier flux d'air F1 et d'un second flux d'air F2. La cloison de séparation 36 peut par exemple s'étendre jusqu'aux roues 22, 24 à ailettes.

Le boîtier d'entrée d'air 30 comporte en outre un logement formant une zone de placement pour un filtre à air. En fonctionnement, ce filtre à air (non représenté) s'étend globalement horizontalement, entre la paroi de séparation 10 et la cloison de séparation 36. En particulier, une première zone du filtre s'étend entre le premier canal de circulation 18 du corps principal et le premier canal d'entrée d'air 32 et une seconde zone du filtre s'étend entre le second canal de circulation 20 du corps principal et le second canal d'entrée d'air 34.

Comme illustré à la figure 1, un premier flux d'air F1 peut circuler au travers du premier canal 32, du filtre à air, et du premier canal de circulation 18 défini par le boîtier supérieur 12 et équipé de la roue 22, avant de déboucher dans une première zone de l'habitacle du véhicule automobile, par exemple au niveau de buses de dégivrage situées à proximité du pare-brise du véhicule.

Par ailleurs, un second flux d'air F2 peut circuler au travers du second canal 34 d'entrée d'air, du filtre à air, de la partie du second canal 20 de circulation définie par le boîtier supérieur 12, de la partie du second canal 20 de circulation définie par le capot 16, et de la partie du second canal 20 définie par le boîtier inférieur 14 et équipée de la seconde roue 24, avant de déboucher dans une seconde zone de l'habitacle du véhicule automobile, par exemple au niveau des buses de pieds disposés en regard des pieds du conducteur et du passager.

Selon l'invention, la surface de la section de passage d'air du premier canal 32 d'entrée d'air est supérieure à la surface de la section de passage d'air du second canal 34 d'entrée d'air, et par exemple environ 1,7 à 2,3 fois supérieure, préférentiellement environ 2 fois.

En pratique, une telle configuration permet de faire circuler un débit d'air plus important en direction de la première partie de l'habitacle, à savoir le pare-brise. Pour obtenir un tel effet, la première roue 22 qui a un diamètre sensiblement identique à celui de la seconde roue 24, est plus large que la seconde roue 24. Les ailettes 23 de la première roue 22 présentent une plus grande dimension selon l'axe de rotation des roues 22, 24 que les ailettes 25 de la seconde roue 24.

Le dispositif 1 est également équipé d'échangeurs de chaleur (évaporateur, radiateur) et/ou d'au moins un réchauffeur (résistance électrique), non réprésentés, permettant d'assurer les fonctions de climatisation (c'est-à-dire de refroidissement) de l'air, de chauffage de l'air et/ou de déshumidification (la déshumidification étant assurée par l'intermédiaire de l'évaporateur) de l'air, comme cela est bien connu en soi.

La cloison de séparation 36 et la paroi de séparation 28 assurent la continuité de la séparation entre les deux flux d'air F1, F2, directement en amont et directement en aval du filtre à air. On supposera que, compte tenu de la structure d'un filtre classique, l'effet de diffusion de l'air dans l'épaisseur du filtre est négligeable, de sorte que cette séparation des flux F1, F2 est conservée lors du passage des flux d'air F1, F2 au travers du filtre (et n'a nul besoin d'être étanche).

Le premier flux d'air F1 et/ou le second flux d'air F2 peuvent être des flux d'air, extérieur au véhicule, ou d'air de recyclage issu de l'habitacle, ou encore être un mélange d'air extérieur et d'air de recyclage.

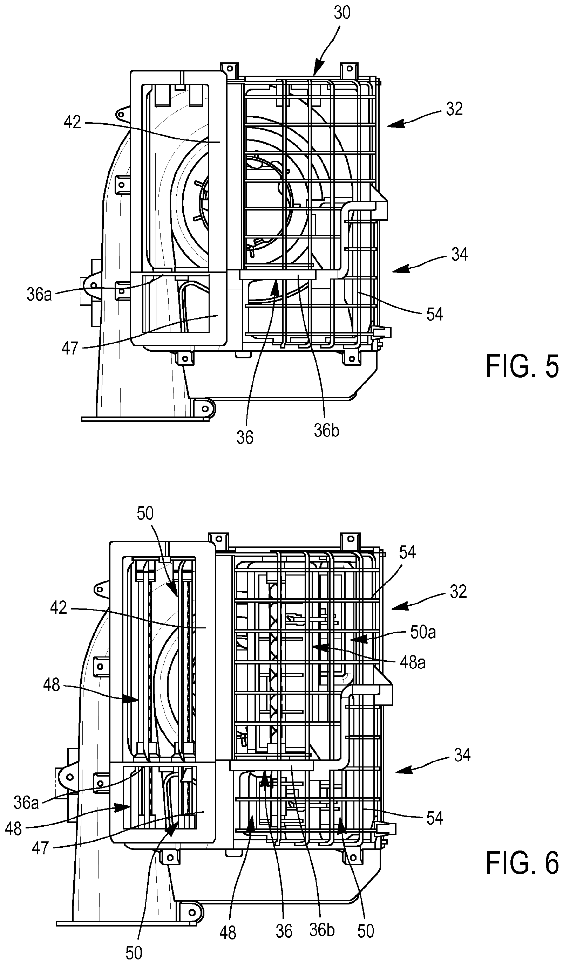

A cette fin, et comme représenté aux figures 5 à 10, le premier canal 32 d'entrée d'air est subdivisé en un premier conduit 38 et un deuxième conduit 40 qui sont séparés l'un de l'autre par une seconde cloison 42 de séparation du boîtier d'entrée d'air 30.

De manière similaire, le second canal 34 d'entrée d'air est subdivisé en un premier conduit 44 et un deuxième conduit 46 séparé l'un de l'autre par une troisième cloison 47 de séparation du boitier d'entrée d'air 30.

Le premier conduit 38 du premier canal 32 d'entrée dair est séparé du premier conduit 44 du second canal 34 d'entrée d'air par une première partie 36a de la cloison de séparation 36. De même, le second conduit 40 du premier canal 32 d'entrée d'air est séparé du second conduit 46 du second canal 34 d'entrée d'air par une deuxième partie 36b de la cloison de séparation 36. Cette deuxième partie 36b est de forme en S.

En pratique, les premiers conduits 38, 44 des premier 32 et second 34 canaux d'entrée d'air sont ainsi reliés à des moyens de prélèvement et d'alimentation en air extérieur (non représentés) et les seconds conduits 36, 40 des premiers 32 et seconds 34 canaux sont reliés à des moyens de prélèvement d'air à l'intérieur de l'habitacle (non représentés).

On comprend qu'ainsi, le débit d'air F1 circulant en direction de la première partie de l'habitacle et le débit d'air F2 circulant en direction de la seconde partie peuvent comprendre un mélange d'air frais et d'air recyclé dont la proportion de chacun est déterminé par les sections des premiers 38, 44 et seconds 40, 46 conduits des premier 32 et second 34 canaux.

Comme représenté aux figures 5 à 7, le dispositif est équipé de moyens d'obturation permettant d'obturer de manière indépendante chacun des premiers 38, 44 et seconds 40, 46 conduits. En pratique, l'entrée d'air comprend ainsi quatre ouvertures formant les extrémités aval des premiers 38, 44 et seconds 40, 46 conduits.

Chaque ouverture 38, 40, 44, 46 du boîtier 30 d'entrée d'air est ainsi associée à deux volets ou clapets 48, 50 dont l'articulation en rotation entre une position d'ouverture et une position de fermeture est réalisée sur le boîtier d'entrée d'air 30 et du côté du boîtier tourné vers les premier 18 et second 20 canaux de circulation du corps principal .

Dans une possibilité de coopération particulière des deux volets 48, 48a, 50, 50a associés à chaque conduit 38, 40, 44, 46 du boîtier d'entrée d'air 30, comme cela est représenté en particulier pour le second conduit 40 du premier canal 32 d'entrée d'air, les volets 48a, 50a peuvent être positionnées de manière à ce que leurs axes de rotation 53, 55 soient sensiblement parallèles et dimensionnées afin qu'en position de blocage de la circulation d'air dans le second conduit 40, l'un des bords périphériques 52 de l'un des volets 48a vienne en contact avec une surface de l'autre volet 50a. Notons que les bords périphériques des volets 48a, 50a peuvent comprendre des lèvres d'étanchéité.

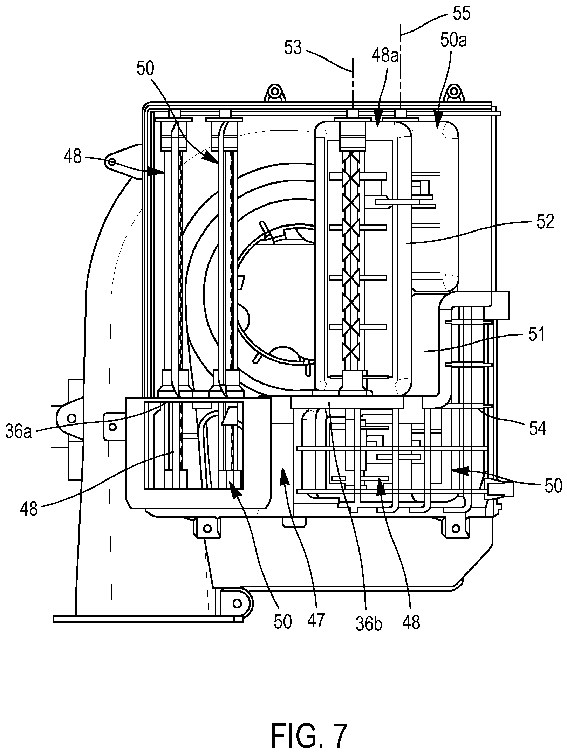

Dans la réalisation pratique de la figure 7, les volets 48, 48a, 50, 50a ont une forme générale rectangulaire. Le volet 48a du second conduit 40 du premier canal d'entrée 32 a une dimension selon son axe de rotation qui est plus importante que celle du volet 50a. En position de blocage de la circulation d'air, le volet 48a vient pour une partie en appui sur une face amont (par rapport au sens de circulation de l'air) du volet 50a et pour une autre partie en appui sur une portion 51 de la seconde partie 36b de la cloison de séparation 36. Cette portion 51, sensiblement plane, est ici sensiblement alignée avec l'axe de rotation 55 du volet 50a. Comme cela est bien visible sur les figures 5 et 6, le boîtier d'entrée d'air comprend un grillage 54 au niveau des seconds 40, 46 conduits des premier 32 et second 34 canaux d'entrée d'air du boîtier 30 de manière à éviter l'introduction dans le dispositif d'objet de tailles moyennes tels que des morceaux de papier issus de l'intérieur de l'habitacle.

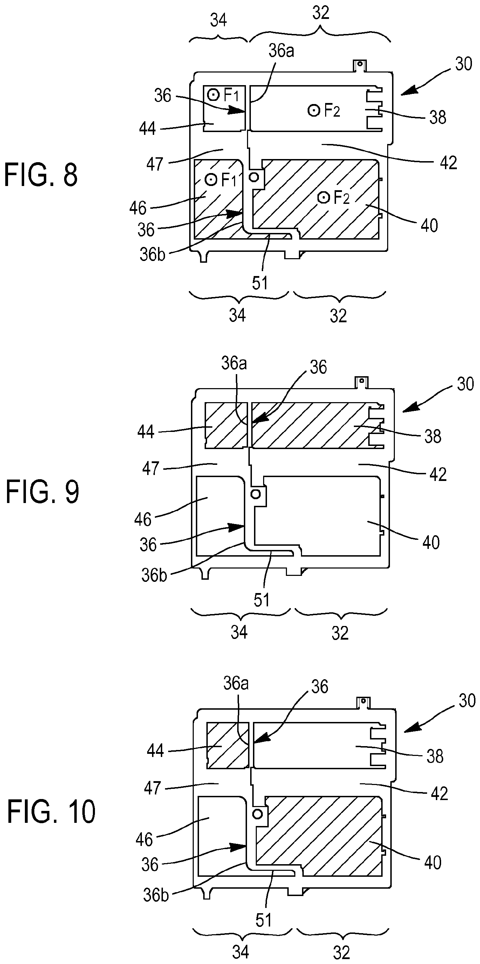

Sur les figures 8 à 10, les hachures représentent des positions fermées des volets 48, 50 obturant l'un et/ou l'autre des premiers 38, 44 et seconds conduits 40, 46.

Comme cela est bien visible en figure 8, la surface de la section de passage d'air du second conduit 40 du premier canal 32 d'entrée d'air est supérieure à la surface de la section de passage d'air du premier conduit 38 du premier canal 32 d'entrée d'air, et par exemple environ 1,7 à 2,3 fois supérieure, préférentiellement environ 2 fois.

En outre, la surface de la section de passage d'air du second conduit 46 du second canal 34 d'entrée d'air est supérieure à la surface de la section de passage d'air du premier conduit 44 du second canal 34 d'entrée d'air et par exemple environ 1,7 à 2,3 fois supérieure, préférentiellement environ 2 fois.

Egalement, la surface de la section de passage d'air du premier conduit 38 du premier canal 32 d'entrée d'air est supérieure à la surface de la section de passage d'air du premier conduit 44 du second canal 3 d'entrée d'air, et par exemple environ 1,7 à 2,3 fois supérieure, préférentiellement environ 2 fois.

Enfin, la surface de la section de passage d'air du second conduit 40 du premier canal 32 d'entrée d'air est supérieure à la surface de la section de passage d'air du second conduit 46 du second canal 34 d'entrée d'air, et par exemple environ 1,7 à 2,3 fois supérieure, préférentiellement environ 2 fois.

En pratique, le dispositif selon l'invention sera très intéressant pour une utilisation en particulier selon l'un des trois scénarios représentés aux figures 8 à 10.

Dans le cas où l'on souhaite n'admettre que de l'air frais dans l'habitacle, alors il conviendra de fermer les volets 48, 50 associées aux seconds conduits 40, 46 des premier 32 et second 34 canaux (figure 8).

Dans le cas où l'on souhaite n'admettre dans l'habitacle que de l'air de recirculation, alors il conviendra de fermer les volets 48, 50 associées aux premiers conduits 38, 44 des premier 32 et second 34 canaux (figure 9).

Dans le cas où l'on souhaite admettre de l'air frais au niveau du pare-brise par exemple ou des aérateurs du tableau de bord et de l'air recyclé au niveau des buses de pieds, il conviendra de fermer les volets 48, 50 du premier conduit 44 du second canal 34 d'entrée d'air et les volets 48, 50 du second conduit 40 du premier canal 32 d'entrée d'air.

## Revendications

1. Dispositif (10) de chauffage, ventilation et/ou climatisation pour un véhicule automobile, comportant un corps principal (12, 14, 16) comportant au moins un premier canal (18) de circulation d'air (F1), destiné à alimenter une première partie d'un habitacle d'un véhicule automobile, un second canal (20) de circulation d'air (F2), destiné à alimenter une seconde partie de l'habitacle, un boîtier (30) d'entrée d'air monté sur le corps principal (12, 14, 16), en amont desdits premier et second canaux (32, 34) de circulation du corps principal par rapport au sens de circulation de l'air (F1, F2), le boîtier (30) d'entrée d'air étant traversé par un premier canal (32) d'entrée d'air, débouchant en regard du premier canal (18) de circulation du corps principal (12, 14, 16), et par un second canal (34) d'entrée d'air débouchant en regard du second canal (20) de circulation du corps principal (12, 14, 16), les premier et second canaux (32, 34) d'entrée d'air du boîtier (30) étant séparés par une première cloison de séparation (36) du boîtier d'entrée d'air (30), la surface de la section de passage d'air du premier canal (32) d'entrée d'air étant,au niveau du boîtier (30) d'entrée d'air, différente de la surface de la section de passage d'air du second canal (34) d'entrée d'air, le premier canal (32) d'entrée d'air étant subdivisé en un premier conduit (38) et un deuxième conduit (40) séparé l'un de l'autre par une seconde cloison (42) de séparation du boitier d'entrée d'air (30) et le second canal (34) d'entrée d'air étant subdivisé en un premier conduit (44) et un deuxième conduit (46) séparé l'un de l'autre par une troisième cloison (47) de séparation du boitier d'entrée d'air (30), **caractérisé en ce que** le dispositif (10) est équipé de moyens d'obturation permettant d'obturer de manière indépendante chacun des premiers (38, 44) et seconds (40, 46) conduits de chacun des premier (32) et second (34) canaux d'entrée d'air.

2. Dispositif selon la revendication 1, **caractérisé en ce que** la surface de la section de passage d'air du premier canal (32) d'entrée d'air est supérieure à la surface de la section de passage d'air du second canal (34) d'entrée d'air, et par exemple environ 1,7 à 2,3 fois supérieure, préférentiellement environ 2 fois.

3. Dispositif selon l'une des revendications précédentes, **caractérisé en ce que** les premiers conduits (38, 44) des premier (32) et second (34) canaux d'entrée d'air sont reliés à des moyens de prélèvement d'air dans une première zone et les seconds conduits (40, 46) des premier (32) et second (34) canaux d'entrée d'air sont reliés à des moyens de prélèvement d'air dans une seconde zone différente de la première zone.

4. Dispositif selon l'une des revendications précédentes, **caractérisé en ce qu'**au niveau du boîtier d'entrée d'air, la surface de la section de passage d'air du second conduit (40) du premier canal (32) d'entrée d'air est supérieure à la surface de la section de passage d'air du premier conduit (38) du premier canal (32) d'entrée d'air, et par exemple environ 1,7 à 2,3 fois supérieure, préférentiellement environ 2 fois.

5. Dispositif selon l'une des revendications précédentes, **caractérisé en ce qu'**au niveau du boîtier d'entrée d'air, la surface de la section de passage d'air du second conduit (46) du second canal (34) d'entrée d'air est supérieure à la surface de la section de passage d'air du premier conduit (44) du second canal (34) d'entrée d'air, et par exemple environ 1,7 à 2,3 fois supérieure, préférentiellement environ 2 fois.

6. Dispositif selon l'une des revendications précédentes, **caractérisé en ce qu'**au niveau du boîtier d'entrée d'air, la surface de la section de passage d'air du premier conduit (38) du premier canal (32) d'entrée d'air est supérieure à la surface de la section de passage d'air du premier conduit (44) du second canal (34) d'entrée d'air, et par exemple environ 1,7 à 2,3 fois supérieure, préférentiellement environ 2 fois.

7. Dispositif selon l'une des revendications précédentes, **caractérisé en ce qu'**au niveau du boîtier d'entrée d'air, la surface de la section de passage d'air du second conduit (40) du premier canal (32) d'entrée d'air est supérieure à la surface de la section de passage d'air du second conduit (46) du second canal (34) d'entrée d'air, et par exemple environ 1,7 à 2,3 fois supérieure, préférentiellement environ 2 fois.

8. Dispositif selon l'une des revendications précédentes, **caractérisé en ce que** les moyens d'obturation comprennent des volets (48, 50) ou clapets articulés à déplacement sur le boîtier d'entrée d'air (30) entre une position d'ouverture et une position de fermeture.

9. Dispositif selon l'une des revendications précédentes, **caractérisé en ce que** le corps principal (12, 14, 116) est équipé de moyens (22) de génération d'un premier flux d'air (F1) à l'intérieur du premier canal (18) de circulation et de moyens (24) de génération d'un second flux d'air (F2) à l'intérieur du second canal (20) de circulation.

10. Dispositif selon la revendication 9, **caractérisé en ce que** lesdits moyens (22, 24) de génération du premier et du second flux d'air (F1, F2) comportent respectivement une première roue à ailettes (22) et une seconde roue à ailettes (24), entraînées par exemple par un même moteur.

11. Dispositif selon la revendication 9 ou 10, **caractérisé en ce que** le corps principal comporte un premier boîtier (12), équipé des moyens (24) de génération du premier flux d'air (F1), et dans lequel est délimitée au moins une partie du premier canal (18) de circulation d'air, le corps principal comportant en outre un second boîtier (14), équipé des moyens (24) de génération du second flux d'air (F2), et dans lequel est délimitée au moins une partie du second canal (20) de circulation d'air.

12. Véhicule automobile, **caractérisé en ce qu'**il est équipé d'un dispositif (10) selon l'une des revendications 1 à 11.

## Patentansprüche

1. Vorrichtung (10) zum Heizen, Belüften und/oder Klimatisieren für ein Kraftfahrzeug, die einen Grundkörper (12, 14, 16) umfasst, der mindestens Folgendes umfasst: einen ersten Kanal (18) zur Zirkulation von Luft (F1), der zur Versorgung eines ersten Teils eines Fahrgastraums eines Kraftfahrzeugs bereitgestellt ist, einen zweiten Kanal (20) zur Zirkulation von Luft (F2), der zur Versorgung eines zweiten Teils des Fahrgastraums bereitgestellt ist, ein Lufteintrittsgehäuse (30), das auf dem Grundkörper (12, 14, 16) angebracht und in Bezug auf die Luftzirkulationsrichtung (F1, F2) dem ersten und dem zweiten Zirkulationskanal (32, 34) des Grundkörpers vorgeschaltet ist, wobei ein erster Lufteintrittskanal (32), der gegenüber dem ersten Zirkulationskanal (18) des Grundkörpers (12, 14, 16) mündet, und ein zweiter Lufteintrittskanal (34), der gegenüber dem zweiten Zirkulationskanal (20) des Grundkörpers (12, 14, 16) mündet, durch das Lufteintrittsgehäuse (30) verlaufen, wobei der erste und der zweite Lufteintrittskanal (32, 34) des Gehäuses (30) durch eine ersten Trennwand (36) des Lufteintrittsgehäuses (30) getrennt sind, wobei sich die Oberfläche des Luftdurchgangsabschnitts des ersten Lufteintrittskanals (32) im Bereich des Lufteintrittsgehäuses von der Oberfläche des Luftdurchgangsabschnitts des zweiten Lufteintrittskanals (34) unterscheidet, wobei der erste Lufteintrittskanal (32) in eine erste Leitung (38) und eine zweite Leitung (40) unterteilt ist, die durch eine zweite Trennwand (42) des Lufteintrittsgehäuses (30) voneinander getrennt sind, und der zweite Lufteintrittskanal (34) in eine erste Leitung (44) und eine zweite Leitung (46) unterteilt ist, die durch eine dritte Trennwand (47) des Lufteintrittsgehäuses (30) voneinander getrennt sind, **dadurch gekennzeichnet**, das die Vorrichtung (10) mit Abschottungsmitteln ausgerüstet ist, die es gestatten, jede von den ersten (38, 44) und den zweiten (40, 46) Leitungen von jedem von dem ersten (32) und dem zweiten (34) Lufteintrittskanal unabhängig abzuschotten.

2. Vorrichtung nach Anspruch 1, **dadurch gekennzeichnet, dass** die Oberfläche des Luftdurchgangsabschnitts des ersten Lufteintrittskanals (32) größer als die Oberfläche des Luftdurchgangsabschnitts des zweiten Lufteintrittskanals (34) ist, und beispielsweise ungefähr 1,7- bis 2,3-mal größer, vorzugsweise ungefähr 2-mal.

3. Vorrichtung nach Anspruch 1, **dadurch gekennzeichnet, dass** die ersten Leitungen (38, 44) des ersten (32) und des zweiten (34) Lufteintrittskanals mit Mitteln zur Entnahme von Luft in einer ersten Zone verbunden sind und die zweiten Leitungen (40, 46) des ersten (32) und des zweiten (34) Lufteintrittskanals mit Mitteln zur Entnahme von Luft in einer zweiten Zone, die sich von der ersten Zone unterscheidet, verbunden sind.

4. Vorrichtung nach einem der vorhergehenden Ansprüche, **dadurch gekennzeichnet, dass** im Bereich des Lufteintrittsgehäuses die Oberfläche des Luftdurchgangsabschnitts der zweiten Leitung (40) des ersten Lufteintrittskanals (32) größer als die Oberfläche des Luftdurchgangsabschnitts der ersten Leitung (38) des ersten Lufteintrittskanals (32) ist, und beispielsweise ungefähr 1,7- bis 2,3-mal größer, vorzugsweise ungefähr 2-mal.

5. Vorrichtung nach einem der vorhergehenden Ansprüche, **dadurch gekennzeichnet, dass** im Bereich des Lufteintrittsgehäuses die Oberfläche des Luftdurchgangsabschnitts der zweiten Leitung (46) des zweiten Lufteintrittskanals (34) größer als die Oberfläche des Luftdurchgangsabschnitts der ersten Leitung (44) des zweiten Lufteintrittskanals (34) ist, und beispielsweise ungefähr 1,7- bis 2,3-mal größer, vorzugsweise ungefähr 2-mal.

6. Vorrichtung nach einem der vorhergehenden Ansprüche, **dadurch gekennzeichnet, dass** im Bereich des Lufteintrittsgehäuses die Oberfläche des Luftdurchgangsabschnitts der ersten Leitung (38) des ersten Lufteintrittskanals (32) größer als die Oberfläche des Luftdurchgangsabschnitts der ersten Leitung (44) des zweiten Lufteintrittskanals (34) ist, und beispielsweise ungefähr 1,7- bis 2,3-mal größer, vorzugsweise ungefähr 2-mal.

7. Vorrichtung nach einem der vorhergehenden Ansprüche, **dadurch gekennzeichnet, dass** im Bereich des Lufteintrittsgehäuses die Oberfläche des Luftdurchgangsabschnitts der zweiten Leitung (40) des ersten Lufteintrittskanals (32) größer als die Oberfläche des Luftdurchgangsabschnitts der zweiten Leitung (46) des zweiten Lufteintrittskanals (34) ist, und beispielsweise ungefähr 1,7- bis 2,3-mal größer, vorzugsweise ungefähr 2-mal.

8. Vorrichtung nach einem der vorhergehenden Ansprüche, **dadurch gekennzeichnet, dass** die Abschottungsmittel schwenkbare Klappen (48, 50) oder Schieber beinhalten, die auf dem Lufteintrittsgehäuse (30) zwischen einer geöffneten Position und einer geschlossenen Position bewegbar sind.

9. Vorrichtung nach einem der vorhergehenden Ansprüche, **dadurch gekennzeichnet, dass** der Grundkörper (12, 14, 116) mit Mitteln (22) zum Erzeugen eines ersten Luftstroms (F1) im Inneren des ersten Zirkulationskanals (18) und mit Mitteln (24) zum Erzeugen eines zweiten Luftstroms (F2) im Inneren des zweiten Zirkulationskanals (20) ausgerüstet ist.

10. Vorrichtung nach Anspruch 9, **dadurch gekennzeichnet, dass** die Mittel (22, 24) zum Erzeugen des ersten und des zweiten Luftstroms (F1, F2) jeweils ein erstes Flügelrad (22) bzw. ein zweites Flügelrad (24) umfassen, die beispielsweise durch einen gleichen Motor angetrieben werden.

11. Vorrichtung nach Anspruch 9 oder 10, **dadurch gekennzeichnet, dass** der Grundkörper ein erstes Gehäuse (12) umfasst, das mit den Mitteln (24) zum Erzeugen des ersten Luftstroms (F1) ausgerüstet ist und in dem mindestens ein Teil des ersten Luftzirkulationskanals (18) abgegrenzt ist, wobei der Grundkörper ferner ein zweites Gehäuse (14) umfasst, das mit den Mitteln (24) zum Erzeugen des zweiten Luftstroms (F2) ausgerüstet ist und in dem mindestens ein Teil des zweiten Luftzirkulationskanals (20) abgegrenzt ist.

12. Kraftfahrzeug, **dadurch gekennzeichnet, dass** es mit einer Vorrichtung (10) nach einem der Ansprüche 1 bis 11 ausgerüstet ist.

## Claims

1. Heating, ventilation and/or air-conditioning device (10) for a motor vehicle, comprising a main body (12, 14, 16) having at least a first duct (18) for circulation of air (F1), intended to supply a first part of an interior of a motor vehicle, a second duct (20) for circulation of air (F2), intended to supply a second part of the interior, an air-inlet housing (30) mounted on the main body (12, 14, 16) upstream of the said first and second circulation ducts (32, 34) of the main body with respect to the direction of circulation of the air (F1, F2), the air-inlet housing (30) having, passing through it, a first air-inlet duct (32) that opens facing the first circulation duct (18) of the main body (12, 14, 16) and a second air-inlet duct (34) that opens facing the second circulation duct (20) of the main body (12, 14, 16), the first and second air-inlet ducts (32, 34) of the housing (30) being separated by a first separating partition (36) of the air-inlet housing (30), the surface area of the air passage section of the first air-inlet duct (32) at the air-inlet housing being different from the surface area of the air passage section of the second air-inlet duct (34), the first air-inlet duct (32) being subdivided into a first conduit (38) and a second conduit (40) that are separated from one another by a second separating partition (42) of the air-inlet housing (30) and the second air-inlet duct (34) being subdivided to a first conduit (44) and a second conduit (46) that are separated from one another by a third separating partition (47) of the air-inlet housing (30), **characterized in that** the device (10) is equipped with obturating means by which it is possible to independently close off each one of the first (38, 44) and the second (40, 46) conduits of each of the first (32) and second (34) air-inlet ducts.

2. Device according to Claim 1, **characterized in that** the surface area of the air passage section of the first air-inlet duct (32) is greater than the surface area of the air passage section of the second air-inlet duct (34), and for example approximately 1.7 to 2.3 times greater, preferably approximately 2 times.

3. Device according to Claim 1, **characterized in that** the first conduits (38, 44) of the first (32) and second (34) air-inlet ducts are connected to means for taking air from a first zone and the second conduits (40, 46) of the first (32) and second (34) air-inlet ducts are connected to means for taking air from a second zone which is different from the first zone.

4. Device according to one of the preceding claims, **characterized in that**, at the air-inlet housing, the surface area of the air passage section of the second conduit (40) of the first air-inlet duct (32) is greater than the surface area of the air passage section of the first conduit (38) of the first air-inlet duct (32), and for example approximately 1.7 to 2.3 times greater, preferably approximately 2 times.

5. Device according to one of the preceding claims, **characterized in that**, at the air-inlet housing, the surface area of the air passage section of the second conduit (46) of the second air-inlet duct (34) is greater than the surface area of the air passage section of the first conduit (44) of the second air-inlet duct (34), and for example approximately 1.7 to 2.3 times greater, preferably approximately 2 times.

6. Device according to one of the preceding claims, **characterized in that**, at the air-inlet housing, the surface area of the air passage section of the first conduit (38) of the first air-inlet duct (32) is greater than the surface area of the air passage section of the first conduit (44) of the second air-inlet duct (34), and for example approximately 1.7 to 2.3 times greater, preferably approximately 2 times.

7. Device according to one of the preceding claims, **characterized in that**, at the air-inlet housing, the surface area of the air passage section of the second conduit (40) of the first air-inlet duct (32) is greater than the surface area of the air passage section of the second conduit (46) of the second air-inlet duct (34), and for example approximately 1.7 to 2.3 times greater, preferably approximately 2 times.

8. Device according to one of the preceding claims, **characterized in that** the obturating means comprise shutters (48, 50) or flaps that are articulated so as to be able to move on the air-inlet housing (30), between an opening position and a closing position.

9. Device according to one of the preceding claims, **characterized in that** the main body (12, 14, 116) is equipped with means (22) for generating a first air flow (F1) inside the first circulation duct (18) and with means (24) for generating a second air flow (F2) inside the second circulation duct (20).

10. Device according to Claim 9, **characterized in that** said means (22, 24) for generating the first and second air flow (F1, F2) respectively comprise a first impeller wheel (22) and a second impeller wheel (24) which are driven, for example, by one and the same motor.

11. Device according to Claim 9 or 10, **characterized in that** the main body has a first housing (12) equipped with the means (24) for generating the first air flow (F1) and in which at least a part of the first air-circulation duct (18) is delimited, the main body additionally having a second housing (14) equipped with the means (24) for generating the second air flow (F2) and in which at least a part of the second air-circulation duct (20) is delimited.

12. Motor vehicle, **characterized in that** it is equipped with a device (10) according to one of Claims 1 to 11.
